# EUROPÄISCHE PATENTSCHRIFT

(11) **EP 1 840 403 B1**
(45) Veröffentlichungstag und Bekanntmachung des Hinweises auf die Patenterteilung: **01.09.2010**
(21) Anmeldenummer: 07102002.8
(22) Anmeldetag: 08.02.2007
(51) Int. Cl.: F16D 65/12

(54) **Motorrad-Bremsscheibe**
Motorcycle brake disk
Disque de frein pour motocyclette

(30) Priorität: 09.02.2006 DE 102006006217
(43) Veröffentlichungstag der Anmeldung: 03.10.2007
(73) Patentinhaber: Riwi Brake Technology GmbH, 50674 Köln (DE)
(72) Erfinder: Wibmer, Richard, 6020, Innsbruck (AT)
(74) Vertreter: Grabherr, Claudia

(56) Entgegenhaltungen:
- EP-A- 1 696 148
- WO-A-01/86166
- DE-U1- 29 713 076
- US-A- 3 895 693
- US-A- 3 907 076

## Beschreibung

Die Erfindung bezieht sich auf eine Segment-Bremsscheibe nach dem Oberbegriff des Patentanspruchs 1.

Eine derartige Segment-Bremsscheibe ist aus der US-A-3 907 076 bekannt. Ähnliche Segment-Bremsscheiben sind aus US-A3 895 693 sowie aus der nicht vorveröffentlichten EP 1 696 148 A bekannt.

Aus der DE 297 13 076 U1 ist eine Segment-Bremsscheibe des gleichen Erfinders vorbekannt, die das Prinzip des unterbrochenen Reibrings erstmals aufgreift. Hier wurde das Prinzip einer kontrollierten Wärmeausdehnung des Reibrings der Segment-Scheibenbremse und die Vermeidung von durch Kraft-/ Wärmeeinwirkung bedingten Gefüge- und Strukturveränderung des Materials durch die Verwendung von einzelnen Segmenten in unterschiedlicher Anzahl anstelle eines ununterbrochenen Reibrings erstmals realisiert. Die einzelnen Ringabschnitte (Segmente) werden über Befestigungslaschen in auf der Trägerscheibe ausgebildete Aufnahmen gehalten und durch Gewindeschrauben in den mit Gewindebohrungen versehenen Aufnahmen (Zapfen) an der Trägerscheibe befestigt. Zwischen den einzelnen Segmenten kann es aufgrund des definierten Spaltmaßes zwischen den Ringabschnitten (Segmenten) nicht mehr zu Wärmebrücken zwischen denselben kommen. Damit wird einem Planverzug des Reibrings vorgebeugt. Die Konstruktion zeichnet sich dadurch aus, dass sich die Segmente bei Bremsmomentbeauschlagung ausschließlich an der Trägerscheibe abstützen und nicht miteinander in Kontakt geraten. Das definierte Spaltmaß zwischen den Segmenten wird bei Bremsmomentbeauschlagung nicht geschlossen. Durch die zweifache Laschenbefestigung kommt es bei Bremsmomentbeauschlagung zu einem Drehmoment, das die in Drehrichtung jeweils hinten liegenden Lasche des Segmentes sowie die hintere Aufnahme des Trägerrings mit einem Druckmoment beaufschlagt, die jeweils vorne liegenden Lasche des Segmentes sowie die vordere Aufnahme des Trägerrings mit einem Zugmoment beaufschlagt. Dieser Konstruktionsansatz führt bei langandauernder Belastung zu einer dynamischen Verformung der Zapfen des Trägerings und der Bohrungen der Befestigungslaschen der Ringabschnitte.

Der gängige Stand der Technik bei Scheibenbremsen für Landkraftfahrzeuge beruht auf dem Prinzip, dass der Reibring der Bremsscheibe aus einem ununterbrochenen, radial umlaufenden Reibring besteht, an welchem per Hydraulikunterstützung durch einen Einzel- oder Mehrkolben-Bremssattel die im Bremssattel befindlichen Beläge über die axial beweglichen Kolben an den Reibring der Bremsscheibe gepresst werden. Über diesen Druck wird ein Reibmoment zwischen Bremsbelag und Bremsscheibe aufgebaut, mittels welchem über das physikalische Prinzip der Umwandlung von Bewegungs- in Wärmeenergie ein negatives Beschleunigungs-Moment (Bremsmoment) erzeugt wird. Der Reibring der Bremsscheibe ist dabei entweder mit der Radnabenaufnahme des Innenrings (Trägerscheibe) materialschlüssig verbunden oder über nietähnliche Verbindungselemente (sogenannte "Floater") spielfrei oder mit Spiel mit dem an der Radnabe zu befestigendem Innenring verbunden.

Aufgrund des ununterbrochenen Reibrings - der bei gängigen Bremsscheiben entweder aus einem Stahl-Grauguss-Material oder einem geschmiedeten Stahl hergestellt wird; seit wenigen Jahren kommen auch Kohlenstoff-Verbundmaterialien oder Aramidfasern zum Einsatz - entstehen bei diesen nach herkömmlichen Prinzip konstruierten Bremsscheiben während des Bremsvorgangs unterschiedliche Temperaturzonen entlang des Reibrings, da die Bremsbeläge während des Bremsvorgangs nur jeweils einen Bruchteil des Reibrings beaufschlagen. Durch die unterschiedlichen Temperaturzonen kann es zum irreversiblen Planverzug des Reibrings kommen, da sich das Metall (oder ein anderes zur Verwendung kommendes Material) je nach temperaturdynamischem Ausdehnungskoeffizienten nur bis zu einem bestimmten Grad radial und axial reversibel ausdehnen kann. Wird durch eine punktuelle Belastungsspitze mit hoher dynamischer Temperaturänderung oder durch eine langandauernde Belastung der temperaturdynamische Ausdehnungskoeffizient des verwendeten Materials überschritten, kommt es zu einem irreversiblen Planverzug des Reibrings. Je nach Belastungsintensität können hiervon auch Bremsscheiben mit vergleichsweise geringer Laufleistung betroffen sein. Der Planverzug führt zu einer ungleichmäßigen, nicht mehr vollständig planen Bremsscheibe. Eine nicht mehr vollständig plane Bremsscheibe (außerhalb des erlaubten Toleranzmaßes) kann nicht mehr die vollständige Bremsleistung entwickeln.

Aufgabe der vorliegenden Erfindung ist es, die Segment-Bremsscheibe der eingangs genannten Art weiterzuentwickeln und dahingehend zu verbessern, dass die Drehmomente der Scheibensegmente günstiger aufgenommen werden.

Diese Aufgabe wird gelöst durch die Merkmale des Patentanspruchs 1.

Weitere Ausbildungen finden sich in den weiteren Ansprüchen.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die im folgenden unter Bezugnahme auf die Zeichnung näher erläutert werden. In dieser Zeichnung zeigen:
- Fig. 1:: eine Draufsicht auf eine Segment-Bremsscheibe mit zwölf bauglei- chen Segmenten,
- Fig. 2:: eine Draufsicht auf ein Segment der Bremsscheibe gemäß Fig. 1,
- Fig. 3:: eine perspektivische Darstellung zweier Segmente ähnlich Figur 2 zur Erläuterung der Funktion,
- Fig. 4:: eine perspektivische Darstellung einer zweiten Segment- Brems- scheibe mit zwei abgenommenen Segmenten, einmal in der Version 1 und einmal in der Version 2,
- Fig. 5:: eine Darstellung eines Kranzes von Segmenten ohne Scheibe, zwei Segmente sind zur besseren Erkennbarkeit der Zeichnung separat dargestellt,
- Fig. 6:: eine perspektivische Darstellung ähnlich Figur 4 einer dritten Seg- ment-Bremsscheibe, wiederum sind zwei Segmente zur besseren Verständlichkeit separat dargestellt,
- Fig. 7:: eine Draufsicht auf zwei separat dargestellte Segmente in Version 1 für die Bremsscheibe gemäß Figur 9,
- Fig. 8:: eine Draufsicht wie Figur 7, jedoch in einer Version 2, für die Seg- ment-Bremsscheibe nach Figur 9,
- Fig. 9:: eine Draufsicht auf eine vierte Ausführung einer Segment- Bremsscheibe, bei der zwei Segmente entnommen sind,
- Fig. 10:: eine Draufsicht auf eine fünfte Ausführung einer Segment- Bremsscheibe,
- Fig. 11:: eine Draufsicht auf zwei nebeneinander angeordnete Segmente als Detail aus Figur 12 und
- Fig. 12:: eine Draufsicht auf eine sechste Ausführung einer Segment- Bremsscheibe.

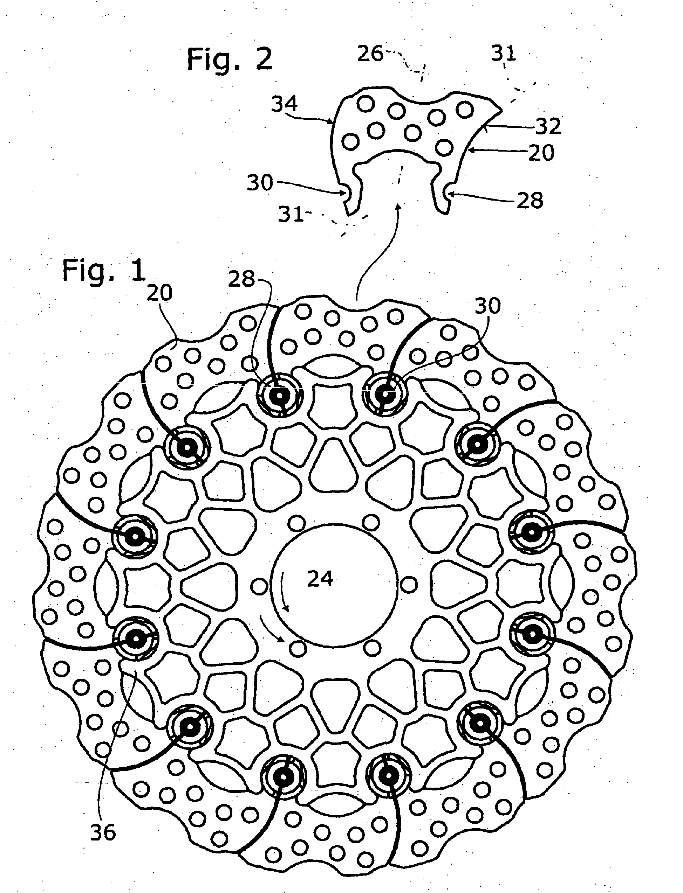

Figur 1 zeigt eine Segment-Bremsscheibe mit zwölf baugleichen Segmenten 20.

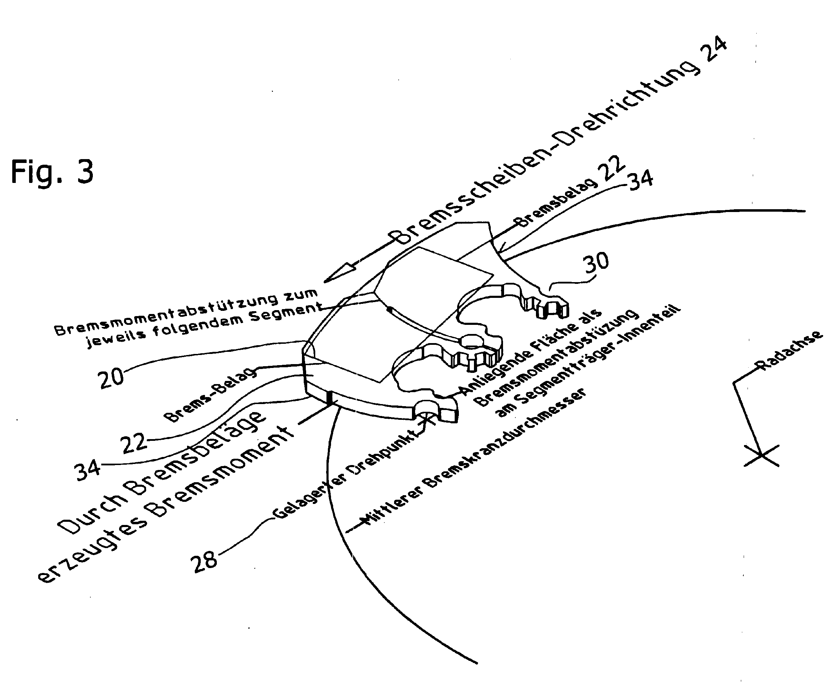

In Figur 2 ist eines der Segmente 20 (siehe Pfeil) im Einzelnen dargestellt, wie es in Figur 1 verwendet wird. In Figur 3 ist schematisch ein Bremsbelag 22 dargestellt. Die Bremsscheibendrehrichtung ist durch den Pfeil 24 dargestellt. Das Segment 20 ist nicht spiegelbildlich zu einer Spiegelebene 26, die durch eine Radachse 38 und eine Radiale definiert ist, welche mittig zwischen zwei Befestigungspunkten 28, 30 des Segments 20 verläuft. Der in Drehrichtung 24 hinten liegende Befestigungspunkt 28 des gezeigten Segments 20 ist im Bremsvorgang stärker belastet als der vordere Befestigungspunkt 30.

Jedes Segment hat eine in Bremsscheiben-Drehrichtung 24 hinten liegende Abstützfläche 32 an seiner Kante und eine entsprechende Anlagefläche 34, diese Flächen sind formmäßig aneinander angepasst. Im Falle eines Bremsvorgangs stützen sie sich aneinander ab. Sie sind vorzugsweise gekrümmt. Vorzugsweise verläuft die Berührungslinie 31 nicht durch die Radachse 38, vielmehr schneidet sie die Spiegelebene 26 zwischen der Radachse 38 und dem Segment 20, vorzugsweise näher am letzteren.

sie die Spiegelebene 26 zwischen der Radachse 38 und dem Segment 20, vorzugsweise näher am letzteren.

Der in Bremsrichtung, also entgegen der Drehrichtung 24, vorn befindliche Befestigungspunkt 28 ist ein gelagerter Drehpunkt. 36 ist der Träger, an dem alle Segmente 20 befestigt sind.

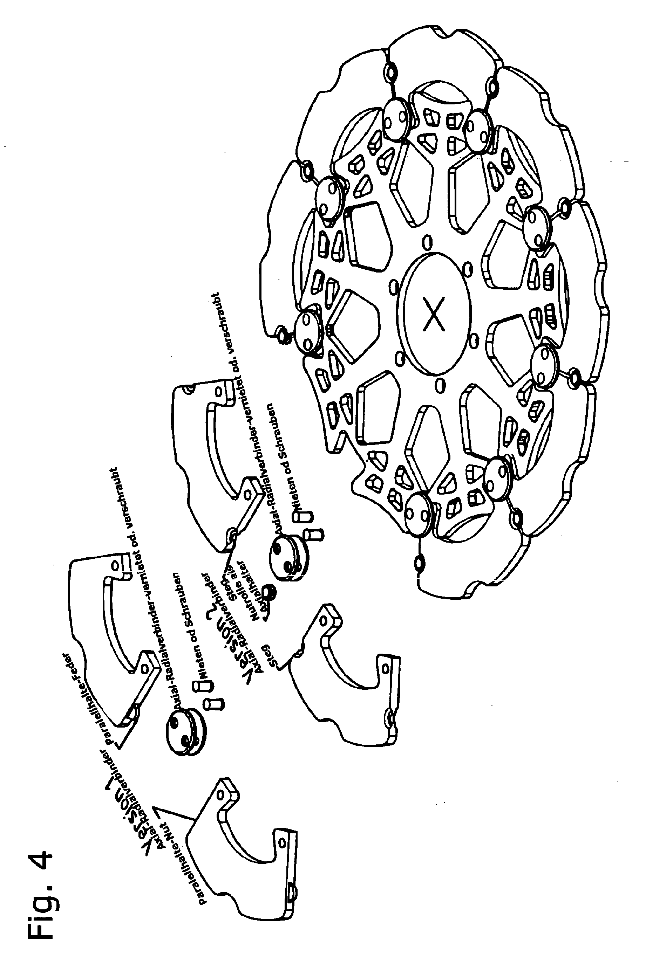

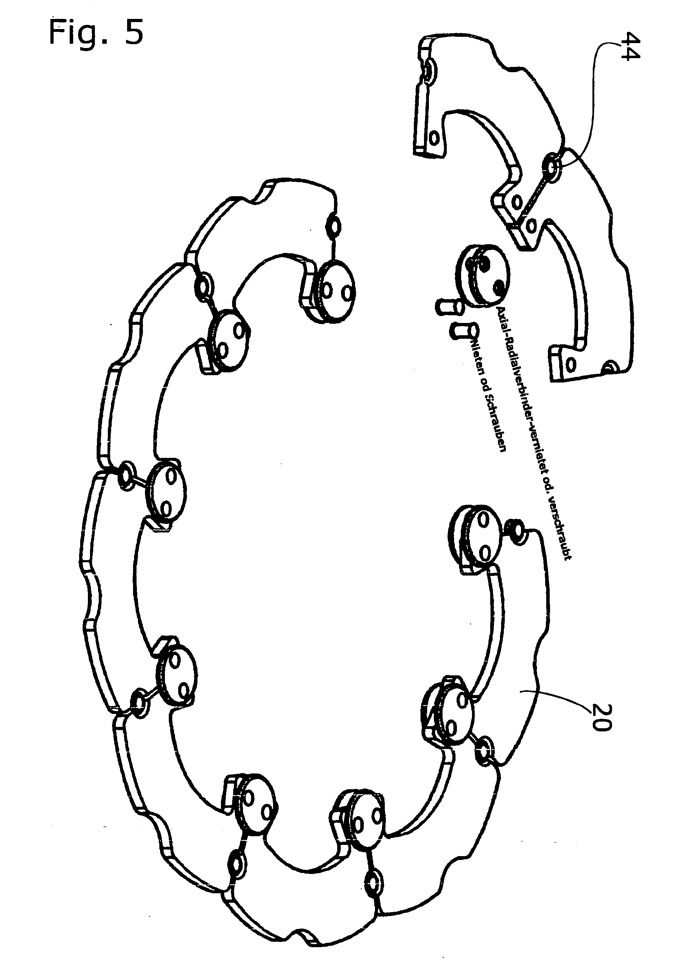

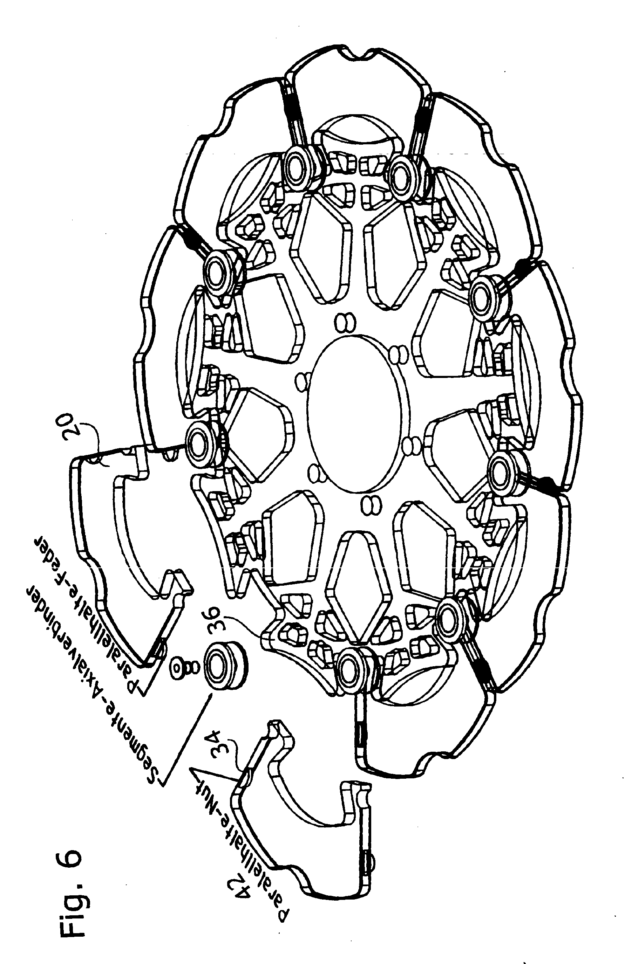

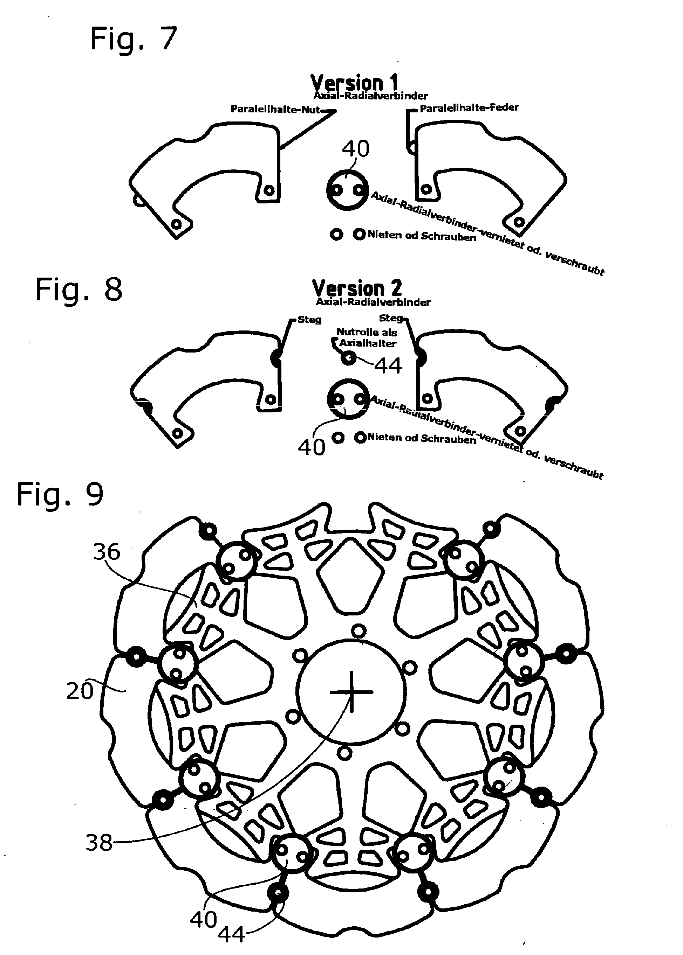

Figur 3 zeigt zwei nebeneinander angeordnete Segmente 20. Weiterhin ist der Bremsbelag 22 gezeigt. Die Figuren 4 bis 8 zeigen unterschiedliche Mittel, um benachbarte Segmente 20 in derselben Radialebene zu halten. Es sind Axial-Radial-Verbinder 40 vorgesehen, mit denen jedes Segment 20 über Niete oder Schrauben am Träger 36 gehalten ist. In Fig. 4, 6 und 7 ist im linken, in Drehrichtung (vorzugsweise) vorn liegenden Segment in der Anlagefläche 34 eine Parallelhalte-Nut 42 vorgesehen, im rechten Segment ist eine zugehörige Parallelhalte-Feder. Die Befestigungspunkte werden durch Axial-Radial-Verbinder, vernietet oder verschraubt, gehalten. Niete oder Schrauben sind dargestellt. In der Version 2 ist Letzteres beibehalten, nunmehr ist aber in jedem Segment ein Steg vorgesehen, in dem jeweils ein Haltemittel in Form einer Nutrolle 44 als AxialHalter eingreift. Ähnliches zeigt auch Figur 5, 8, 9.

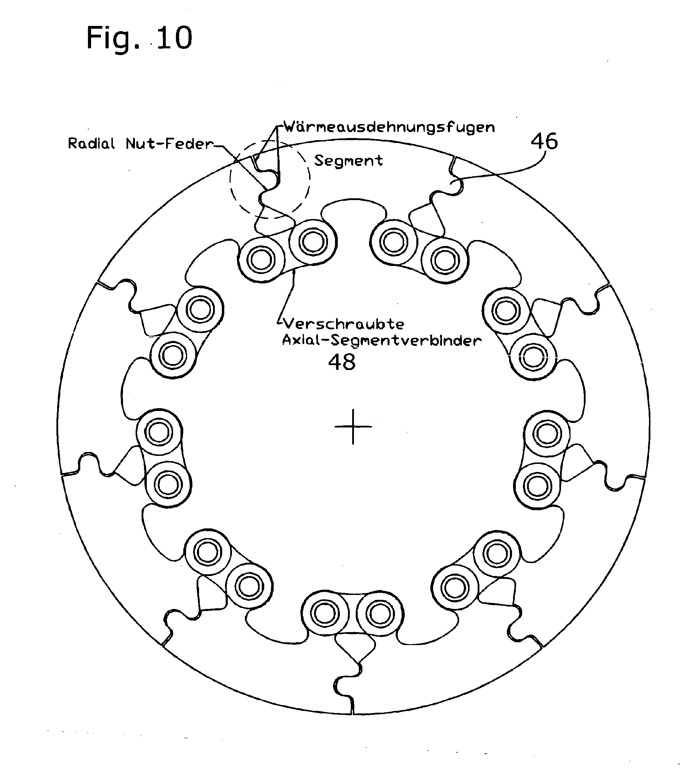

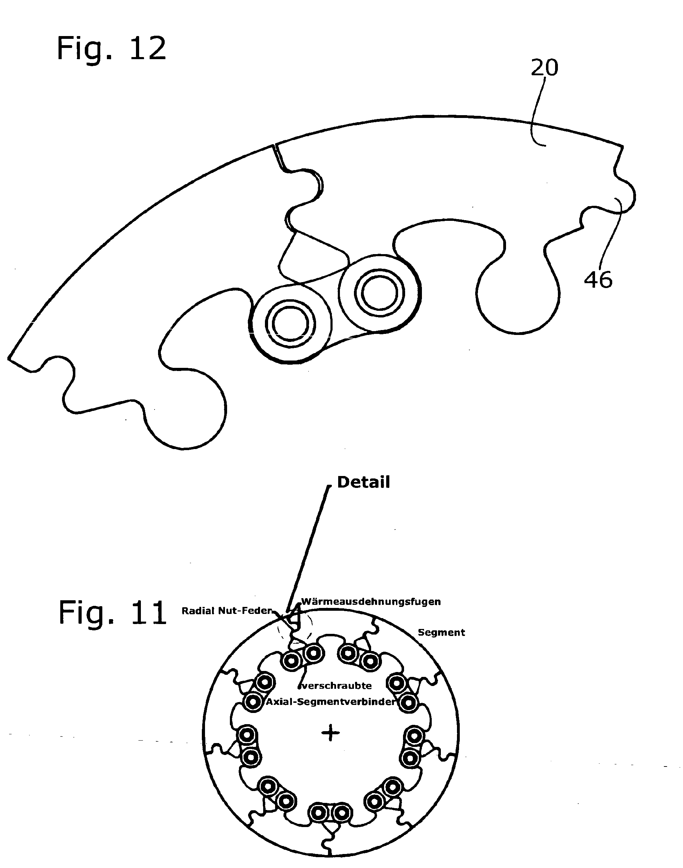

Gemäß Fig. 10 und 11 haben die Segmente 20 Nasen 46 und im Nachbarsegment dazu passende Ausnehmungen. Dabei sind Wärmeausdehnungsfugen vorgesehen.

Segment-Bremsscheibe für motorisierte Landkraftfahrzeuge bestehend aus einer unterschiedlichen Anzahl und in unterschiedlicher Formgebung befindlichen Segmenten mit sich an dem in Drehrichtung jeweils folgenden Segment abstützenden und dieses in Position bringenden Segmenten.

Die Segment-Bremsscheibe ist für motorisierte Landkraftfahrzeuge vorgeshen, innerhalb dieser Fahrzeugkategorie sollen subsumiert sein: PKW, leichte LKW (bis 7,5 to), Motorräder, Motorroller, Quads. Die Segment-Bremsscheibe ist dabei in ihrer konstruktionsseitigen Ausgestaltung so aufgebaut, dass ein Segment bei Lastaufbringung durch die Bremsbeläge des Bremssattels (Bremsmoment) das jeweils in Bremsrichtung folgende Segment durch einen Hebelmechanismus in Position bringt. Die einzelnen Segmente stützen sich hierbei einerseits am Innenkranz und andererseits an dem jeweils folgenden Segment ab und bringen dieses durch Lastaufbringung über ein Drehmoment in Position.

Es werden zweierlei Ansätze erfüllt: Einerseits der bereits bekannten Überwindung des Planverzuges des Reibrings durch die Verwendung von Segmenten anstelle eines umlaufenden, ununterbrochenen Reibrings. Die Segmente können sich durch definiertes Axial- und Radialspiel bei Kraft-/ Wärmeeinwirkung kontrolliert ausdehnen und wieder zusammenziehen, ohne dass es zu unkontrollierten Wärmebrücken zwischen den Segmenten kommt. Überdies wird durch die Abstützung eines Segmentes am in Drehrichtung jeweils folgenden Segment das jeweils folgende Segment durch eine kontrollierte Hebelwirkung in Position gebracht, so dass bei einer Bremsmomentbeaufschlagung ein geschlossener, nacheinander und sich wiederholender Bewegungsablauf aller Segmente erfolgt. Dadurch, dass das jeweils folgende Segment von dem vorangehenden Segment in Position gebracht wird, erfolgt die Momentübertragung auf den Innenring mit geringeren dynamischen Lastspitzen an der Kontaktfläche zwischen der in Drehrichtung vorne liegenden Lasche des Segmentes und der "Nase" des Trägerrings.

Die Segmente sind bei diesem Konstruktionsansatz nicht fest mit dem Trägerring über Zapfen verbunden, sondern liegen lediglich an innerhalb des äußeren Radius des Trägerrings ausgebildeten "Nasen" an. Über diese Kontaktfläche wird das Bremsmoment übertragen. Die besondere Formgebung der Segmente einerseits und der "Nasen" des Trägerrings andererseits verhindern einen in radialer Richtung, durch Fliehkraft begünstigten Versatz der Segmente. Ein axialer Versatz der Segmente wird durch zwei einander gegenüberliegende Verbinder vermieden, die miteinander verschraubt sind. Die Verbinder sind nur miteinander fest verschraubt, nicht mit den Segmenten oder dem Trägerring. Die Verbinder übertragen kein Bremsmoment.

Einerseits werden Segmente in unterschiedlicher Anzahl und Formgebung verwendet, andererseits wird das Bremsmoment von den Segmenten auf einen größeren, dynamisch belastbareren Querschnitt des Trägerings übertragen. Durch die In-Position-Bringung eines Segmentes durch das jeweils in Drehrichtung vorangestellte Segment werden dynamische Lastspitzen auf dem Trägerring vermieden bzw. deutlich reduziert. Darüber hinaus wird durch die Formgebung der Laschen der Segmente und der "Nasen" des Trägerings das Bremsmoment auf einen größeren Materialquerschnitt übertragen. Ermüdungs- und Verschleißerscheinungen wird wirksam vorgebeugt. Dieses Prinzip ist dem Konstruktionsansatz des bereits angemeldeten Gebrauchmusters einerseits und den bei Bremsscheiben herkömmlicher Bauart verwendeten nietähnlichen Verbindungselementen zwischen Reibring und Trägerring unter Langzeitbelastungsaspekten und damit verbundenen Verschleißerscheinungen deutlich überlegen.

Fig. 1 zeigt einen teilweisen Querschnitt durch eine erfindungsgemäße Segment-Bremsscheibe.

Die Segment-Bremsscheibe besteht aus einem Trägerring 36 und einzelnen Segmenten 20 in unterschiedlicher Anzahl und Verbindern 40 in gleicher Anzahl. Die Segmente stützen sich einerseits am Trägering 36 und andererseits am in Drehrichtung nachfolgenden Segment ab bzw. dieses durch Momentübertragung in Position bringen, insbesondere etwas nach innen schwenken. Die Segmente 20 können sich unter Kraft-/ Wärmeeinwirkung kontrolliert ausdehnen und wieder zusammenziehen, ohne dass es zu einem Planverzug der Segmente 20 und damit des Reibrings der Bremsscheibe kommen kann. Die Segmente 20 sind in den Trägerring 36 in der Form eingebracht, dass sie in radialer Richtung nicht verschiebbar sind. Die Segmente 20 haben innerhalb der Aussparung des Trägerrings 36 ein definiertes (Floating-) Spiel inne. Die Segmente sind mittels Verbindern 42, 44 gegen axialen Versatz gesichert und diese Verbinder übertragen kein Bremsmoment. Ein durch Bremsmoment belastetes Segment bringt das jeweils in Drehrichtung nachfolgende Segment durch ein Belastungsmoment dergestalt in Position, dass die Momentübertragung auf den Innenring 36 mit kontrollierter dynamischer Last ohne bzw. mit geringen dynamische Lastspitzen an der Kontaktfläche zwischen Segment und Trägerring 36 erfolgt.

Bei einer Bremsscheibe für Landkraftfahrzeuge sind auf einem Innenring anstelle eines umlaufenden, ununterbrochenen Reibrings Segmente angebracht, die eine kontrollierte Ausdehnung des verwendeten Materials unter Kraft-/ Wärmeeinwirkung ohne Bildung von Wärmebrücken zwischen den Segmenten zulassen. Die Segmente stützen sich bei Krafteinwirkung einerseits am Trägering und andererseits am in Drehrichtung folgenden Segment ab und bringen das jeweils folgende Segment durch ein Drehmoment in Position. Die Segmente sind mit definiertem Spiel im Trägerring gelagert. Die Segmente übertragen das Bremsmoment über eine Kontaktfläche auf den Trägerring, weder ist eine feste Schraub- oder NietVerbindung zwischen den Segmenten und dem Trägerring gegeben, noch sind die Segmente über Zapfen mit dem Trägerring verbunden. Die Segmente werden durch Verbinder in Position gehalten, die ihrerseits keine Kraftübertragung übernehmen. Bei Demontage der Verbinder können die Segmente axial in beide Richtungen aus der Trägerscheibe entnommen werden.

## Patentansprüche

1. Segment-Bremsscheibe einer Scheibenbremse mit Bremsbelag, insbesondere für Motorräder, mit einer Vielzahl von Segmenten, die an einem Träger gehalten sind, wobei die Segmente jeweils in zwei Befestigungspunkten mit dem Träger verbunden sind, wobei jedes Segment (20) eine in Bremsscheiben-Drehrichtung hinten liegende Abstützfläche aufweist, jedes Segment (20) eine in Bremsscheiben-Drehrichtung vorn liegende Anlagefläche aufweist, und Abstützfläche und Anlagefläche in ihrer Form einander angepasst sind, **dadurch gekennzeichnet, dass** die Segmente in Umfangrichtung kürzer sind als die entsprechende Länge des Bremsbelages (22).

2. Segment-Bremsscheibe nach Anspruch 1, **dadurch gekennzeichnet, dass** im Bremszustand die Abstützfläche eines Segments in Kontakt ist an der Anlagefläche (34) des in Bremsscheiben-Drehrichtung unmittelbar dahinter liegenden Segments (20) und sich an der Anlagefläche (34) abstützt.

3. Segment-Bremsscheibe nach Anspruch 1, **dadurch gekennzeichnet, dass** die Abstützfläche und die Anlagefläche jeweils gekrümmt verlaufen.

4. Segment-Bremsscheibe nach Anspruch 1, **dadurch gekennzeichnet, dass** im Bremszustand die Abstützfläche entlang einer Berührungslinie an der Anlagefläche (34) des in Bremsscheiben-Drehrichtung unmittelbar dahinter liegenden Segments anliegt, und dass die Berührungslinie nicht durch die Radachse verläuft.

5. Segment-Bremsscheibe nach Anspruch 4, **dadurch gekennzeichnet, dass** die Berührungslinie eine Spiegelebene zwischen der Radachse und dem Segment schneidet, wobei die Spiegelebene definiert ist durch die Radachse und eine Radiale, welche mittig zwischen zwei Befestigungspunkten des Segments, mit denen das Segment (20) jeweils an einem Träger (36) befestigt ist, verläuft.

6. Segment-Bremsscheibe nach Anspruch 1, **dadurch gekennzeichnet, dass** die Segmente (20) spiegelbildlich oder nicht spiegelbildlich sind zu einer Spiegelebene (26), die definiert ist durch die Radachse (38) und eine Radiale, welche mittig zwischen den beiden Befestigungspunkten (28, 30) hindurchläuft.

7. Segment-Bremsscheibe nach einem der Ansprüche 1 bis 6, **dadurch gekennzeichnet, dass** einer der beiden Befestigungspunkte (28, 30) ein gelagerter Abstützpunkt (gelagerter Drehpunkt) eines Segments (20) ist und der Abstützfläche näher ist als der Anlagefläche (34).

8. Segment-Bremsscheibe nach einem der Ansprüche 1 bis 7, **dadurch gekennzeichnet, dass** einer der beiden Befestigungspunkte (28, 30) ein gelagerter Abstützpunkt ist und sich etwa auf derselben Radialen befindet wie die Abstützfläche.

9. Segment-Bremsscheibe nach einem der Ansprüche 1 bis 8, **dadurch gekennzeichnet, dass** die beiden Befestigungspunkte (28, 30) unterschiedlich ausgebildet sind, wobei der in der Bremsschreiben-Drehrichtung vorn liegende Abstützpunkt als Widerlager ausgebildet ist, oder dass die beiden Befestigungspunkte (28, 30) baugleich ausgebildet sind.

10. Segment-Bremsscheibe nach einem der Ansprüche 1 bis 9, **dadurch gekennzeichnet, dass** die beiden Befestigungspunkte (28, 30) unterschiedlich ausgebildet sind, wobei der in Bremsschreiben-Drehrichtung hinten liegende Abstützpunkt als gelagerter Drehpunkt ausgebildet ist und höhere Kräfte aufnehmen kann als der andere, oder dass die beiden Befestigungspunkte (28, 30) baugleich ausgebildet sind.

11. Segment-Bremsscheibe nach einem der Ansprüche 1 bis 10, **dadurch gekennzeichnet, dass** zwischen den einzelnen Segmenten (20) Mittel vorgesehen sind, die benachbarte Segmente (20) in der gleichen Radialebene halten, insbesondere eine Parallelhalte-Feder und zugehörige Parallelhalte-Nut (42), Stege in den benachbarten Segmenten (20), in denen Nutrollen (44) als Axialhalter vorgesehen sind und in Umfangsrichtung vorspringende Nasen (46), die in zugehörige Ausnehmungen eingreifen.

12. Segment-Bremsscheibe einem der Ansprüche 1 bis 11, **dadurch gekennzeichnet, dass** in den Befestigungspunkten (28, 30) zwischen den Segmenten (20) und dem Träger (36) Axial-Radialverbinder (40) oder Axial-Segementverbinder (48) vorgesehen sind, und dass sie vorzugsweise vernietet oder verschraubt sind.

13. Segment-Bremsscheibe nach Anspruch 12, **dadurch gekennzeichnet, dass** die Axial-Radialverbinder (40) oder Axial-Segementverbinder (48) jeweils einen Stift oder zwei Stifte aufweisen, und dass vorzugsweise der Stift als Schraube oder Niet ausgebildet ist.

14. Segment-Bremsscheibe einem der Ansprüche 1 bis 13, **dadurch gekennzeichnet, dass** sie mehr als 12, vorzugsweise mehr als 15, insbesondere mehr als 17 einzelne Segmente (20) aufweist.

15. Segment-Bremsscheibe einem der Ansprüche 1 bis 14, **dadurch gekennzeichnet, dass** die einzelnen Segmente (20) baugleich sind.

## Claims

1. Segmented brake disc of a disc brake with friction lining, in particular for motorcycles, having a multiplicity of segments which are held on a support, with the segments being connected to the support in each case at two fastening points, with each segment (20) having a support surface situated at the rear in the brake disc rotational direction, each segment (20) having a contact surface situated at the front in the brake disc rotational direction, and the support surface and contact surface being matched to one another in terms of shape, **characterized in that** the segments are shorter in the circumferential direction than the corresponding length of the brake lining (22).

2. Segmented brake disc according to Claim 1, **characterized in that**, in the braking state, the support surface of a segment is in contact with, and is supported on, the contact surface (34) of the segment (20) situated immediately behind in the brake disc rotational direction.

3. Segmented brake disc according to Claim 1, **characterized in that** the support surface and the contact surface run in each case in a curved fashion.

4. Segmented brake disc according to Claim 1, **characterized in that**, in the braking state, the support surface bears along a contact line against the contact surface (34) of the segment situated immediately behind in the brake disc rotational direction, and **in that** the contact line does not run through the wheel axis.

5. Segmented brake disc according to Claim 4, **characterized in that** the contact line intersects a plane of mirror-symmetry between the wheel axis and the segment, with the plane of mirror-symmetry being defined by the wheel axis and a radial line which runs centrally between two fastening points of the segment by means of which the segment (20) is fastened in each case to a support (36).

6. Segmented brake disc according to Claim 1, **characterized in that** the segments (20) are mirror-symmetrical or not mirror-symmetrical with respect to a plane of mirror-symmetry (26) which is defined by the wheel axis (38) and a radial line which runs centrally between the two fastening points (28, 30).

7. Segmented brake disc according to one of Claims 1 to 6, **characterized in that** one of the two fastening points (28, 30) is a mounted support point (mounted pivot point) of a segment (20) and is closer to the support surface than to the contact surface (34).

8. Segmented brake disc according to one of Claims 1 to 7, **characterized in that** one of the two fastening points (28, 30) is a mounted support point and is situated on approximately the same radial line as the support surface.

9. Segmented brake disc according to one of Claims 1 to 8, **characterized in that** the two fastening points (28, 30) are of different design, with the support point which is situated at the front in the brake disc rotational direction being designed as a counter bearing, or **in that** the two fastening points (28, 30) are of structurally identical design.

10. Segmented brake disc according to one of Claims 1 to 9, **characterized in that** the two fastening points (28, 30) are of different design, with the support point situated at the rear in the brake disc rotational direction being designed as a mounted pivot point and being capable of absorbing higher forces than the other, or **in that** the two fastening points (28, 30) are of structurally identical design.

11. Segmented brake disc according to one of Claims 1 to 10, **characterized in that**, between the individual segments (20), means are provided which hold adjacent segments (20) in the same radial plane, in particular a parallel-holding tongue and associated parallel-holding groove (42), webs in the adjacent segments (20), in which groove rollers (44) are provided as axial holders, and lugs (46) which project in the circumferential direction and which engage into associated recesses.

12. Segmented brake disc according to one of Claims 1 to 11, **characterized in that** axial-radial connectors (40) or axial segment connectors (48) are provided at the fastening points (28, 30) between the segments (20) and the support (36), and **in that** said axial-radial connectors (40) or axial segment connectors (48) are preferably riveted or screwed.

13. Segmented brake disc according to Claim 12, **characterized in that** the axial-radial connector (40) or axial segment connector (48) has in each case one pin or two pins, and **in that** the pin is preferably formed as a screw or rivet.

14. Segmented brake disc according to one of Claims 1 to 13, **characterized in that** said segmented brake disc has more than 12, preferably more than 15, in particular more than 17, individual segments (20).

15. Segmented brake disc according to one of Claims 1 to 14, **characterized in that** the individual segments (20) are of structurally identical design.

## Revendications

1. Disque de frein à segments d'un frein à disques avec garniture de frein, en particulier pour des motos, comprenant une pluralité de segments, qui sont fixés sur un support, les segments étant reliés chacun en deux points de fixation au support, chaque segment (20) présentant une surface d'appui située à l'arrière dans le sens de rotation des disques de frein, chaque segment (20) présentant une surface d'application disposée à l'avant dans le sens de rotation des disques de frein, et la surface d'appui et la surface d'application étant adaptées l'une à l'autre dans leur forme, **caractérisé en ce que** les segments sont plus courts dans le sens périphérique que la longueur correspondante de la garniture de frein (22).

2. Disque de frein à segments selon la revendication 1, **caractérisé en ce que**, dans l'état de freinage, la surface d'appui d'un segment est en contact sur la surface d'application (34) du segment (20) situé directement derrière dans le sens de rotation du disque de frein et s'appuie sur la surface d'application (34).

3. Disque de frein à segments selon la revendication 1, **caractérisé en ce que** la surface d'appui et la surface d'application sont agencées chacune de façon incurvée.

4. Disque de frein à segments selon la revendication 1, **caractérisé en ce que**, dans l'état de freinage, la surface d'appui s'applique le long d'une ligne de contact sur la surface d'application (34) du segment situé directement derrière dans le sens de rotation des disques de frein, et **en ce que** la ligne de contact ne passe pas par l'axe de roue.

5. Disque de frein à segments selon la revendication 4, **caractérisé en ce que** la ligne de contact coupe un plan de miroir entre l'axe de roue et le segment, le plan de miroir étant défini par l'axe de roue et une radiale, qui est agencée au centre entre deux points de fixation du segment, avec lesquels chaque segment (20) est fixé sur un support (36).

6. Disque de frein à segments selon la revendication 1, **caractérisé en ce que** les segments (20) sont symétriques ou non symétriques par rapport à un plan de miroir (26) qui est défini par l'axe de roue (38) et une radiale qui passe au centre entre les deux points de fixation (28, 30).

7. Disque de frein à segments selon l'une quelconque des revendications 1 à 6, **caractérisé en ce que** l'un des deux points de fixations (28, 30) est un point d'appui monté sur palier (point de rotation monté sur palier) d'un segment (20) et est plus proche de la surface d'appui que de la surface d'application (34).

8. Disque de frein à segments selon l'une quelconque des revendications 1 à 7, **caractérisé en ce que** l'un des deux points de fixation (28, 30) est un point d'appui monté sur palier et se trouve à peu près sur la même radiale que la surface d'appui.

9. Disque de frein à segments selon l'une quelconque des revendications 1 à 8, **caractérisé en ce que** les deux points de fixation (28, 30) sont conçus différemment, le point d'appui situé à l'avant dans le sens de rotation des disques de frein étant conçu comme palier de butée, ou **en ce que** les deux points de fixation (28, 30) sont conçus identiques.

10. Disque de frein à segments selon l'une quelconque des revendications 1 à 9, **caractérisé en ce que** les deux points de fixation (28, 30) sont conçus différemment, le point d'appui situé à l'arrière dans le sens de rotation des disques de frein étant conçu comme point de rotation monté sur palier et pouvant réceptionner des forces plus élevées que l'autre point d'appui ou **en ce que** les deux points de fixation (28, 30) sont conçus identiques.

11. Disque de frein à segments selon l'une quelconque des revendications 1 à 10, **caractérisé en ce qu'**il est prévu entre des segments (20) individuels des moyens qui maintiennent des segments (20) voisins dans le même plan radial, en particulier un ressort de maintien en parallèle et une rainure de maintien (42) associée, des entretoises dans les segments (20) voisins dans lesquelles des poulies à gorge (44) sont prévues comme supports axiaux et des ergots (46) avançant dans le sens périphérique, qui s'engagent dans des évidements spécifiques.

12. Disque de frein à segments selon l'une quelconque des revendications 1 à 11, **caractérisé en ce que** des dispositifs de liaison dans le sens axial-radial (40) ou des dispositifs de liaison de segment dans le sens axial (48) sont prévus aux points de fixation (28, 30) entre les segments (20) et le support (36) et **en ce qu'**ils sont de préférence rivetés ou vissés.

13. Disque de frein à segments selon la revendication 12, **caractérisé en ce que** les dispositifs de liaison dans le sens axial-radial (40) ou des dispositifs de liaison de segment dans le sens axial (48) présentent chacun une broche ou deux broches, et **en ce que** de préférence la broche est conçue comme vis ou rivet.

14. Disque de frein à segments selon l'une quelconque des revendications 1 à 13, **caractérisé en ce qu'**il présente plus que 12, de préférence plus que 15 et en particulier plus que 17 segments (20) individuels.

15. Disque de frein à segments selon l'une quelconque des revendications 1 à 14, **caractérisé en ce que** les segments (20) individuels sont identiques.
